(19) Europäisches Patentamt
European Patent Office
Office européen des brevets

(11) Numéro de publication: **0 129 479**
**A1**

(12) **DEMANDE DE BREVET EUROPEEN**

(21) Numéro de dépôt: 84401228.6

(22) Date de dépôt: 14.06.84

(51) Int. Cl.³: C 08 F 10/00
C 08 F 4/60

(30) Priorité: 15.06.83 FR 8309861

(43) Date de publication de la demande: 27.12.84 Bulletin 84/52

(84) Etats contractants désignés: AT BE CH DE FR GB IT LI LU NL SE

(71) Demandeur: Société Chimique des Charbonnages S.A.
Tour Aurore Place des Reflets
F-92080 Paris La Défense Cédex 5(FR)

(72) Inventeur: Machon, Jean-Pierre
83, rue Delisse-Engrand
F-62400 Bethune(FR)

(74) Mandataire: Dubost, Thierry
SOCIETE CHIMIQUE DES CHARBONNAGES Service
Propriété Industrielle B.P. 57
F-62670 Mazingarbe(FR)

(54) **Copolymères modifiés de l'éthylène et d'au moins une alpha-oléfine et procédé pour leur préparation.**

(57) Copolymères modifiés de l'éthylène et d'au moins une $\alpha$-oléfine ayant de 3 à 12 atomes de carbone, comprenant de 0,5 à 10% en moles de motifs dérivés de ladite $\alpha$-oléfine. Leur viscosité limite mesurée est comprise entre 1,3 et 1,5 fois leur viscosité limite calculée à partir de la distribution des masses moléculaires.

Procédé de préparation de copolymères modifiés de l'éthylène et d'au moins une $\alpha$-oléfine ayant de 3 à 12 atomes de carbone, comprenant de 0,5 à 10% en moles de motifs dérivés de ladite $\alpha$-oléfine. Leur viscosité limite mesurée est comprise entre 1,3 et 10 fois leur viscosité limite calculée à partir de la distribution des masses moléculaires. Ils sont préparés par copolymérisation en continu de l'éthylène avec au moins une $\alpha$-oléfine, dans au moins un réacteur comprenant au moins une zone réactionnelle, en présence d'un système catalytique de type Ziegler, à une température de 180°C à 320°C et sous une pression de 300 à 2500 bars, en présence, le cas échéant, de jusqu'à 2% en moles d'hydrogène, le temps de séjour moyen du système catalytique dans le réacteur est compris entre 1 à 120 secondes, caractérisé en ce qu'on introduit dans au moins une zone réactionnelle de 0,01 à 2 millimoles par kg de copolymère d'au moins un diaryldialkylalcane, à une température comprise entre 220°C et 320°C, sous une pression comprise entre 500 et 1000 bars.

EP 0 129 479 A1

Croydon Printing Company Ltd.

La présente invention concerne des copolymères modifiés de l'éthylène et d'au moins une α-oléfine et un procédé pour leur préparation.

Il est connu depuis longtemps que l'on peut polymériser l'éthylène sous très haute pression et à température élevée en présence d'un initiateur de radicaux libres. On obtient de cette façon un polymère connu sous le nom de polyéthylène basse densité radicalaire. Quel que soit son indice de fluidité, ce polymère fait généralement preuve d'une étirabilité passable lors de la confection de gaine tubulaire et d'une médiocre résistance au déchirement. En revanche, il permet d'obtenir une bonne stabilité de la bulle lors de l'extrusion-soufflage et il possède une processabilité excellente ; la processabilité est définie comme d'une part l'absence de rupture prématurée de l'extrudat ("melt-fracture") et d'autre part la puissance consommée lors de l'extrusion.

Des améliorations substantielles de l'étirabilité et à la résistance au déchirement ont été apportées en préparant des copolymères d'éthylène et d'au moins une α-oléfine comme le propylène et le butène-1 en présence d'un système catalytique de type Ziegler. Cependant on constate, lors de leur extrusion-soufflage, une instabilité de la bulle et une tendance spontanée à l'agrandissement des trous en cas de perforation de la bulle. On constate également la rupture prématurée de l'extrudat lors de l'extrusion.

Le brevet français n° 2.132.780 décrit des copolymères éthylène/-α-oléfine modifiés par l'action, dans une extrudeuse, d'initiateurs de radicaux libres en des quantités comprises entre 0,005 et 5 % en poids par rapport au polymère à modifier, à une température comprise entre 204 et 345°C, sous une pression comprise entre 14 et 350 bars.

Les polymères ainsi modifiés ont tous, par rapport au polymère dont ils dérivent, une distribution des masses moléculaires réduite, un indice de fluidité augmenté d'au moins 50 %, une masse moléculaire moyenne diminuée.

Le brevet anglais n° 1.043.082 décrit le mélange intime de copolymères éthylène/α-oléfine avec de 0,001 à 10 % en poids d'un initiateur de radicaux libres, à une température comprise entre 60 et 300°C, de préférence dans une extrudeuse.

Les brevets allemands n° 1.301.540 et 1.495.285 décrivent le traitement, entre 50 et 250°C, d'une solution ou suspension de polyoléfine dans un solvant inerte par un initiateur de radicaux libres (0,005 à 20 % en poids par rapport à la polyoléfine) en présence d'un sensibilisateur (sulfite, thiosulfate, hydrazine, mercaptan, etc...). Ce procédé permet d'abaisser la viscosité réduite des polyoléfines de 1-20 à 0,3-5.

Un but de l'invention est d'obtenir des polymères de l'éthylène ayant simultanément, dans l'application à la fabrication de films, d'une part les qualités du polyéthylène basse densité radicalaire à savoir la stabilité de la bulle et la processabilité et d'autre part celles des copolymères obtenus en présence de systèmes catalytiques de type Ziegler à savoir l'étirabilité et la résistance au déchirement.

La demande de brevet européen n°82/402276.8 au nom du même demandeur décrit une solution pour atteindre le but précité, consistant en des copolymères modifiés de l'éthylène et d'au moins une α-oléfine ayant de 3 à 12 atomes de carbone, comprenant de 0,5 à 10 % en moles de motifs dérivés de ladite α-oléfine, caractérisés en ce que leur viscosité limite mesurée est comprise entre 1,5 et 10 fois leur viscosité limite calculée à partir de la distribution des masses moléculaires. Ces copolymères modifiés peuvent être préparés par un procédé continu de copolymérisation de l'éthylène avec au moins une α-oléfine, dans au moins un réacteur, en présence d'un système catalytique de type Ziegler, à une température de 180°C à 320°C et sous une pression de 300 à 2500 bars, en présence, le cas échéant, de jusqu'à 2 % en moles d'hydrogène, le temps de séjour moyen du système catalytique dans le réacteur étant compris entre 1 et 120 secondes, caractérisé en ce qu'on introduit en fin de réaction de 0,01 à 1 millimole par kg de copolymère d'au moins un initiateur de radicaux libres, à une température comprise entre 220°C et 320°C, sous une pression comprise entre 500 et 1000 bars. Ils peuvent aussi être préparés par un procédé consistant, dans une première étape à copolymériser de l'éthylène avec au moins une α-oléfine, dans au moins un réacteur, en présence d'un système catalytique de type Ziegler, à une température de 30°C à 320°C et sous une pression de 1 à 2500 bars, en présence, le cas échéant, de jusqu'à 2 % en moles d'hydrogène, caractérisé en ce que dans une seconde étape on met le copolymère obtenu dans la première étape en présence de 0,01 à 1 millimole par kg de copolymère d'au moins un initiateur de radicaux libres choisi parmi les 2,2-azo-bis(acyloxyalcanes), à une température comprise entre 220°C et 320°C, pendant une durée comprise entre 5 et 200 secondes, dans une machine de transformation.

Le demandeur propose maintenant un autre procédé pour préparer les copolymères modifiés décrits dans la demande de brevet européen n°82/402276.8, ainsi qu'une classe de copolymères modifiés de l'éthylène et d'une α-oléfine qui, tout en atteignant le but précité, présente des caractéristiques différentes.

Un premier objet de l'invention concerne des copolymères modifiés

de l'éthylène et d'au moins une α-oléfine ayant de 3 à 12 atomes de carbone, comprenant de 0,5 à 10 % en moles de motifs dérivés de ladite α-oléfine, caractérisés en ce que leur viscosité limite mesurée est comprise entre 1,3 et 10 fois leur viscosité limite calculée à partir de la distribution des masses moléculaires. On décrit ci-après un procédé de préparation de l'ensemble de ces copolymères modifiés. La présente invention concerne plus particulèrement, en tant que produits industriels nouveaux, la classe des copolymères modifiés tels que ci-dessus et dont la viscosité limite mesurée est comprise entre 1,3 et 1,5 fois la viscosité limite calculée à partir de la distribution des masses moléculaires.

L'α-oléfine peut être choisie parmi le propylène, le butène-1, le pentène-1, l'hexène-1, le méthyl-pentène-1, l'heptène-1, l'octène-1 ou leurs mélanges.

Par viscosité limite mesurée $\eta_o^m$ on entend la valeur de la viscosité à gradient de cisaillement nul obtenue par extrapolation de la courbe de la viscosité mesurée en fonction du gradient de cisaillement. Les mesures sont effectuées à l'aide de tout matériel approprié et en particulier de la balance rhéomètre décrite dans le brevet français n° 1.462.343. Avantageusement les mesures sont effectuées à la température à laquelle est mesuré l'indice de fluidité selon la norme ASTM D 1238-73 c'est-à-dire à 190°C.

Par viscosité limite calculée $\eta_o^c$ on entend la valeur de la viscosité à gradient de cisaillement nul obtenue par calcul à partir de la distribution des masses moléculaires déterminée par chromatographie par perméation de gel (GPC). La théorie de Bueche (J. Chem. Phys. 1956 (25) 599) sur la viscosité limite calculée se traduit pour les copolymères de l'éthylène et d'au moins une α-oléfine, à la température de 190°C, par la relation :

$$\text{Log } \eta_o^c = 3{,}482 \log M_t - 13{,}342$$

dans laquelle $M_t$ représente la masse moléculaire moyenne rhéologique. Celle-ci s'exprime, en fonction de la masse $M_i$ et de la proportion $C_i$ de chaque fraction de polymère, comme suit :

$$M_t = \left(\sum C_i M_i^{1,21}\right)^{\frac{1}{1,21}}$$

Ainsi, quel que soit le copolymère modifié selon l'invention, $\eta_o^c$ est la viscosité limite calculée qu'aurait un copolymère d'éthylène et d'α-oléfine de même masse moléculaire moyenne en nombre (Mn), de même masse

moléculaire moyenne en poids (Mw), de même indice de fluidité (IF) et de même masse volumique ( $\rho$ ). Le rapport $\eta_0^m / \eta_0^c$ obtenu pour des copolymères non modifiés de l'éthylène et d'$\alpha$-oléfine est sensiblement égal à 1, aux erreurs expérimentales près.

Les copolymères modifiés selon l'invention ont généralement un indice de fluidité compris entre 0,1 et 10 dg/min et une masse volumique comprise entre 0,910 et 0,955 g/cm$^3$. Dans l'application à la fabrication de films tubulaires, c'est-à-dire lorsque leur indice de fluidité ne dépasse pas environ 3 dg/min, ces copolymères modifiés montrent une remarquable processabilité et d'excellentes propriétés, notamment une étirabilité industrielle, définie comme l'épaisseur de film permettant une fabrication continue par extrusion-soufflage pendant une durée de 2 heures sans perturbations, aussi faible que 7 microns. Ils sont entièrement solubles et extractibles par les solvants habituels des polyoléfines.

Un second objet de l'invention concerne un procédé amélioré de préparation des copolymères décrits ci-dessus. En effet les procédés proposés antérieurement pour la préparation de copolymères modifiés, conformément à la demande de brevet européen n° 82402276.8, ont en commun l'emploi comme initiateurs de radicaux libres de molécules carbonées comprenant au moins un hétéroatome, en général l'oxygène. Ces molécules présentent un certain nombre d'inconvénients du fait de leur réaction possible avec les composants du système catalytique de type Ziegler, ou encore du fait de la réaction possible entre les composants du système catalytique de type Ziegler d'une part et les produits de décomposition de ces molécules (tels que dioxyde de carbone, alcools, cétones) d'autre part. Pour résoudre les problèmes posés par ces inconvénients, on est conduit :

. d'une part à éviter un contact direct dans une canalisation ou dans le réacteur entre les composants du système catalytique de type Ziegler et les molécules comportant un hétéroatome utilisées comme initiateurs de radicaux libres,

. d'autre part à éviter que la concentration des produits de décomposition de l'initiateur de radicaux libres dans les circuits de recyclage des monomères non convertis puisse atteindre un niveau suffisamment élevé pour influer défavorablement sur l'activité catalytique.

Le caractère délicat et contraignant de ces mesures de précaution est manifeste et a orienté les recherches vers la définition d'un procédé amélioré permettant de s'affranchir des inconvénients des molécules à hétéroatome.

Le procédé amélioré objet de la présente invention est un procédé continu de copolymérisation de l'éthylène avec au moins une α-oléfine, dans au moins un réacteur comprenant au moins une zone réactionnelle, en présence d'un système catalytique de type Ziegler, à une température de 180°C à 320°C et sous une pression de 300 à 2500 bars, en présence, le cas échéant, de jusqu'à 2 % en moles d'hydrogène, le temps de séjour moyen du système catalytique dans le réacteur étant compris entre 1 et 120 secondes, caractérisé en ce qu'on introduit dans au moins une zone réactionnelle de 0,01 à 2 millimoles par kg de copolymère d'au moins un diaryldialkylalcane, à une température comprise entre 220°C et 320°C, sous une pression comprise entre 500 et 1000 bars. La valeur maximale de la pression dans l'étape d'introduction du diaryldialkylalcane dans une zone réactionnelle est choisie en vue d'éviter la polymérisation du monomère n'ayant pas réagi et donc la formation de polyéthylène basse densité radicalaire.

Par diaryldialkylalcane au sens de la présente invention on entend un composé de formule

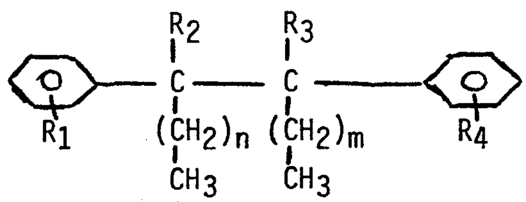

dans laquelle $R_2$ et $R_3$ sont des radicaux alkyles ayant de 1 à 3 atomes de carbone, $R_1$ et $R_4$ sont choisis parmi l'atome d'hydrogène et les radicaux alkyles ayant de 1 à 4 atomes de carbone, $0 \leq m \leq 2$ et $0 \leq n \leq 2$. Parmi la famille des composés ayant cette formule, le 2,3 diphényl-2,3 diméthylbutane (communément appelé biscumyle) et le 3,4 diphényl-3,4 diméthylhexane sont particulièrement adaptés.

La copolymérisation est effectuée dans au moins un réacteur comprenant au moins une zone réactionnelle. Le réacteur peut être autoclave ou tubulaire avec plusieurs zones réactionnelles. Il pourra être avantageux d'adopter une disposition particulière de l'installation de polymérisation par exemple l'une de celles décrites dans les brevets français n° 2.346.374 et 2.385.745. L' α-oléfine est soit introduite soit formée par oligomérisation de l'éthylène. La teneur en α-oléfine dans le mélange réactionnel en fonction de la nature de ladite α-oléfine ; elle est avantageusement comprise entre 15 et 35 % en poids pour le propylène, entre 5 et 65 % en poids pour le butène-1, entre 5 et 80 % en poids pour l'hexène-1. Elle n'est pas nécessairement constante le long du réacteur.

Le système catalytique de type Ziegler comprend d'une part au

moins un activateur choisi parmi les hydrures et les composés organométalliques des métaux des groupes I à III de la Classification Périodique et d'autre part au moins un composé halogéné d'un métal de transition des groupes IVa à VIa, éventuellement fixé sur un support inerte ou mélangé à un composé d'un métal du groupe VIII.

Le support inerte sur lequel est déposé le catalyseur Ziegler comprend par exemple un ou plusieurs des composés suivants : $MgCl_2$, $Al_2O_3$, $MoO_3$, $MnCl_2$, $SiO_2$, MgO.

Le procédé selon l'invention peut être mis en oeuvre en copolymérisant l'éthylène et l' $\alpha$-oléfine en présence d'un hydrocarbure saturé tel que le propane, le butane, etc... employé à raison de jusqu'à 50 % en poids, principalement lorsque la température et/ou la pression sont faibles. Afin de contrôler avec précision l'indice de fluidité du copolymère modifié obtenu, il peut aussi être avantageux d'effectuer la copolymérisation en présence de jusqu'à 2 % en moles d'hydrogène.

Dans le procédé selon l'invention, l'introduction du diaryldialkylalcane dans une zone réactionnelle peut être effectuée sous forme de solution ou de suspension. Une variante du procédé consiste à introduire le diaryldialkylalcane dans la zone réactionnelle simultanément avec l'un et/ou l'autre des composants du système catalytique de type Ziegler.

Les exemples non limitatifs suivants ont pour but d'illustrer l'invention.

EXEMPLE 1

Dans un réacteur autoclave cylindrique de volume 3 litres divisé en 3 zones à l'aide d'écrans métalliques on copolymérise, sous une pression de 790 bars, un mélange constitué de 65 % en poids d'éthylène et de 35 % en poids de butène-1. Les températures sont de 200°C dans la première zone, 240°C dans la seconde zone et 235°C dans la troisième zone. Le système catalytique est constitué du catalyseur $TiCl_3$, 1/3 $AlCl_3$, 2$VCl_3$ activé par le triéthylaluminium dans un rapport Al/Ti + V égal à 3 et est injecté dans les première et seconde zones. La copolymérisation est effectuée en présence de 0,07 % en moles d'hydrogène. On introduit dans la troisième zone 0,35 millimole de biscumyle (2,3 diphényl-2,3 diméthylbutane) par kg de copolymère, sous forme d'une solution dans une coupe $C_{11}$-$C_{12}$ d'hydrocarbures. Les caractéristiques suivantes du copolymère modifié obtenu figurent dans le tableau ci-après :

- masse volumique $\rho$ exprimée en g/cm3
- indice de fluidité IF exprimé en dg/min et mesuré selon la norme ASTM D 1238-73

- viscosité limite $\eta_o^m$ mesurée à 190°C à l'aide de la balance rhéomètre décrite dans le brevet français n° 1.462.343 et exprimée en poises
- rapport $\eta_o^m / \eta_o^c$.

EXEMPLE 2

On copolymérise, dans le réacteur de l'exemple 1 dont les zones sont portées respectivement aux températures de 200°C, 235°C et 270°C, sous une pression de 790 bars et en présence de 0,05 % en moles d'hydrogène, un mélange de 65 % en poids d'éthylène et 35 % en poids de butène-1.

On injecte dans chacune des trois zones le système catalytique de l'exemple 1. On intoduit en outre dans la troisième zone, simultanément avec ledit système catalytique, 0,4 millimole de biscumyle par kg de copolymère.

Dans le tableau ci-après figurent les caractéristiques du copolymères modifié obtenu.

EXEMPLE 3

On opère dans les mêmes conditions qu'à l'exemple 2, à l'exception de la quantité et de la zone d'injection du biscumyle. Celui-ci est en effet injecté dans la seconde zone du réacteur, simultanément avec le système catalytique, à raison de 0,35 millimole par kg de copolymère. D'autre par le mélange copolymérisé comprend 75 % en poids d'éthylène et 25 % en poids de butène-1. Les caractéristiques du copolymère modifié ainsi obtenu figurent dans le tableau ci-après.

TABLEAU

| Exemple | $\rho$ | IF | $\eta_o^m$ | $\eta_o^m / \eta_o^c$ |
|---|---|---|---|---|
| 1 | 0,922 | 1,0 | 104 000 | 1,65 |
| 2 | 0,922 | 0,9 | 126 000 | 1,38 |
| 3 | 0,928 | 0,9 | 125 000 | 1,36 |

## REVENDICATIONS

1. Copolymères modifiés de l'éthylène et d'au moins une α-olefine ayant de 3 à 12 atomes de carbone, comprenant de 0,5 à 10 % en moles de motifs dérivés de ladite α-oléfine, caractérisés en ce que leur viscosité limite mesurée est comprise entre 1,3 et 1,5 fois leur viscosité limite calculée à partir de la distribution des masses moléculaires.

2. Copolymères modifiés selon la revendication 1, caractérisés en ce que leur indice de fluidité est compris entre 0,1 et 10 dg/min.

3. Copolymères modifiés selon l'une des revendications 1 et 2, caractérisés en ce que leur masse volumique est comprise entre 0,910 et 0,955 g/cm3.

4. Procédé de préparation de copolymères modifiés de l'éthylène et d'au moins une α-oléfine ayant de 3 à 12 atomes de carbone, comprenant de 0,5 à 10 % en moles de motifs dérivés de ladite α-oléfine, leur viscosité limite mesurée étant comprise entre 1,3 et 10 fois leur viscosité limite calculée à partir de la distribution des masses moléculaires, par copolymérisation en continu de l'éthylène avec au moins une α-oléfine, dans au moins un réacteur comprenant au moins une zone réactionnelle, en présence d'un sytème catalytique de type Ziegler, à une température de 180°C à 320°C et sous une pression de 300 à 2500 bars, en présence, le cas échéant, de jusqu'à 2 % en moles d'hydrogène, le temps de séjour moyen du système catalytique dans le réacteur étant compris entre 1 et 120 secondes, caractérisé en ce qu'on introduit dans au moins une zone réactionnelle de 0,01 à 2 millimoles par kg de copolymère d'au moins un diaryldialkylalcane, à une température comprise entre 220°C et 320°C, sous une pression comprise entre 500 et 1000 bars.

5. Procédé selon la revendication 4, caractérisé en ce que le système catalytique de type Ziegler comprend d'une part au moins un activateur choisi parmi les hydrures et les composés organométalliques des métaux des groupes I à III de la Classification Périodique et d'autre part au moins un composé halogéné d'un métal de transition des groupes IVa à VIa, éventuellement fixé sur un support inerte ou mélangé à un composé d'un métal du groupe VIII.

6. Procédé selon l'une des revendications 4 et 5, caractérisé en ce que le diaryldialkylalcane est introduit dans la zone réactionnelle simultanément avec l'un et/ou l'autre des composants du système catalytique de type Ziegler.

7. Procédé selon l'une des revendications 4 à 6, caractérisé en ce que la copolymérisation est effectuée en présence de jusqu'à 50 % en poids d'un hydrocarbure saturé.

8. Procédé selon l'une des revendications 4 à 7, caractérisé en ce que le diaryldialkylalcane est le 2,3 diphényl-2,3 diméthylbutane.

9. Procédé selon l'une des revendications 4 à 7, caractérisé en ce que le diaryldialkylalcane est le 3,4 diphényl-3,4 diméthylhexane.

10. Procédé selon l'une des revendications 4 à 9, caractérisé en ce que l' α-oléfine est le butène-1 et en ce que sa teneur est comprise entre 5 et 65 % en poids.

Office européen des brevets

**RAPPORT DE RECHERCHE EUROPEENNE**

0129479

Numéro de la demande

EP 84 40 1228

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| D,A | EP-A-0 083 521 (SOCIETE CHIMIQUE DES CHARBONNAGES S.A.)<br>* Revendications 1-10 *<br>--- | 1,4,5, 10 | C 08 F 10/00<br>C 08 F 4/60 |
| A | CHEMICAL ABSTRACTS, vol. 83, no. 8, 25 août 1975, page 16, no. 59475a, Columbus, Ohio, US; A.P. GOLOSOV et al.: "High-pressure polymerization of ethylene in the presence of isopropyl alcohol and cyclohexane as chain-transfer agents" & NEFTEPERERAB. NEFTEKHIM. (MOSCOW) 1975,(4), 28-30<br>* Résumé *<br>----- | 1,4 | |
| | | | DOMAINES TECHNIQUES RECHERCHES (Int. Cl. 3) |
| | | | C 08 F |

Le présent rapport de recherche a été établi pour toutes les revendications

| Lieu de la recherche | Date d'achèvement de la recherche | Examinateur |
|---|---|---|
| LA HAYE | 17-09-1984 | DECOCKER L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant